(19) Europäisches Patentamt
European Patent Office
Office européen des brevets

(11) **EP 3 372 637 A1**

(12) **EUROPEAN PATENT APPLICATION**

(43) Date of publication:
**12.09.2018 Bulletin 2018/37**

(21) Application number: **18155517.8**

(22) Date of filing: **07.02.2018**

(51) Int Cl.:
*C08L 9/00* (2006.01)        *C08L 9/06* (2006.01)
*C08K 3/04* (2006.01)        *C08K 3/36* (2006.01)
*B60C 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **08.03.2017 JP 2017043973**

(71) Applicant: **Sumitomo Rubber Industries, Ltd.**
**Kobe-shi, Hyogo 651-0072 (JP)**

(72) Inventor: **OSHIMO, Masaki**
**Kobe-shi,, Hyogo 651-0072, (JP)**

(74) Representative: **TBK**
**Bavariaring 4-6**
**80336 München (DE)**

(54) **RUBBER COMPOSITION FOR TIRES AND PNEUMATIC TIRE**

(57)    The present invention provides a rubber composition for tires that can provide for a balanced improvement of fuel economy and abrasion resistance, and a pneumatic tire formed from the rubber composition. The present invention relates to a rubber composition for tires, containing: a styrene-butadiene rubber having a styrene content of 30% by mass or more; and a polybutadiene rubber having a stress relaxation time ($T_{80}$) of 10 or more.

EP 3 372 637 A1

**Description**

TECHNICAL FIELD

The present invention relates to a rubber composition for tires and a pneumatic tire.

BACKGROUND ART

In recent years, the social demand for reduced carbon dioxide emissions has been increasing to save resources and energy and also to protect the environment. For this purpose, various automotive techniques, including weight reduction and use of electric energy, have also been proposed. Therefore, there is a need for tires for automobiles that have reduced rolling resistance to enhance fuel economy and further have other improved properties such as abrasion resistance.

Known methods for improving fuel economy include, for example, the use of a silica-containing formulation; the reduction of the amount of filler; and the use of a filler having a low reinforcing effect. However, these methods tend to reduce some properties such as abrasion resistance.

Other proposed methods for improving fuel economy are for example described in Patent Literature 1, which describes using a diene rubber (modified rubber) that has been modified with an organosilicon compound containing an amino group and an alkoxy group. Although these conventional techniques improve fuel economy, it is also important to ensure sufficient abrasion resistance from economic and safety standpoints. The conventional techniques still have room for improvement in this regard because the abrasion resistance, which has a trade-off relationship with fuel economy, is insufficient.

CITATION LIST

PATENT LITERATURE

Patent Literature 1: JP 2000-344955 A

SUMMARY OF INVENTION

TECHNICAL PROBLEM

The present invention aims to solve the above problem and provide a rubber composition for tires that can provide for a balanced improvement of fuel economy and abrasion resistance, and a pneumatic tire formed from the rubber composition.

SOLUTION TO PROBLEM

The present invention relates to a rubber composition for tires, containing: a styrene-butadiene rubber having a styrene content of 30% by mass or more; and a polybutadiene rubber having a stress relaxation time ($T_{80}$) of 10 or more.

The styrene-butadiene rubber preferably has a Mooney viscosity of 35 to 75 and a ratio of weight average molecular weight (Mw) to number average molecular weight (Mn) of 10.00 or less.

The polybutadiene rubber preferably has a cis content of 96% by mass or more, a Mooney viscosity of 35 to 75, and a ratio of weight average molecular weight (Mw) to number average molecular weight (Mn) of 5.00 or less.

The styrene-butadiene rubber is preferably present in an amount of 10% to 80% by mass based on 100% by mass of a rubber component in the rubber composition.

The polybutadiene rubber is preferably present in an amount of 10% to 50% by mass based on 100% by mass of the rubber component.

The rubber composition preferably contains at least one of carbon black or silica.

The rubber composition preferably contains 30 parts by mass or more of silica per 100 parts by mass of the rubber component.

The present invention also relates to a pneumatic tire, including a tire component formed from the rubber composition.

ADVANTAGEOUS EFFECTS OF INVENTION

The rubber composition for tires of the present invention contains: a styrene-butadiene rubber having a styrene content of 30% by mass or more; and a polybutadiene rubber having a stress relaxation time ($T_{80}$) of 10 or more. Such a rubber composition can provide for a balanced improvement of fuel economy and abrasion resistance, and can be used to provide a pneumatic tire excellent in both properties.

DESCRIPTION OF EMBODIMENTS

The rubber composition for tires of the present invention contains: a styrene-butadiene rubber having a styrene content of 30% by mass or more; and a polybutadiene rubber having a stress relaxation time ($T_{80}$) of 10 or more.

The combined use of a styrene-butadiene rubber having a styrene content of 30% by mass or more and a polybutadiene rubber having a stress relaxation time ($T_{80}$) of 10 or more can provide for a balanced improvement of fuel economy and abrasion resistance as compared to a combination of a styrene-butadiene rubber having a styrene content of less than 30% by mass and a polybutadiene rubber having a stress relaxation time ($T_{80}$) of 10 or more or a combination of a styrene-butadiene rubber having a styrene content of 30% by mass or more and a polybutadiene rubber having a stress relaxation time ($T_{80}$) of less than 10.

The effect produced by the combined use of a styrene-butadiene rubber having a styrene content of 30% by mass or more and a polybutadiene rubber having a stress relaxation time ($T_{80}$) of 10 or more is particularly pronounced when silica is incorporated. The effect is more pronounced when silica is present in an amount of 30 parts by mass or more per 100 parts by mass of the rubber component.

As described, the rubber component in the rubber composition according to the present invention includes both a styrene-butadiene rubber (SBR) having a styrene content of 30% by mass or more and a polybutadiene rubber (BR) having a stress relaxation time ($T_{80}$) of 10 or more. First, such a rubber component will be described.

The SBR used in the present invention has a styrene content of 30% by mass or more, preferably 35% by mass or more, more preferably 37% by mass or more. With SBR having a styrene content of less than 30% by mass, the effect of the present invention is insufficient. The styrene content is also preferably 50% by mass or less, more preferably 45% by mass or less, still more preferably 42% by mass or less. With SBR having a styrene content of more than 50% by mass, fuel economy or abrasion resistance may deteriorate.

Herein, the styrene content of SBR is determined by $^1$H-NMR analysis.

The SBR preferably has a Mooney viscosity of 35 to 75, more preferably 37 to 65. When the Mooney viscosity falls within the above range, a balanced improvement of processability, rubber strength, fuel economy, abrasion resistance, and crack propagation resistance can be achieved.

Herein, the Mooney viscosity of SBR or BR refers to a Mooney viscosity measured at 100°C (Mooney viscosity $ML_{1+4}$ (100°C)) in accordance with ISO289 or JIS K6300-1:2013.

Herein, Mooney viscosity is an industrial index of viscosity measured with a Mooney viscometer (a type of rotary plastometer). In the term "$ML_{1+4}$ (100°C)", M indicates Mooney viscosity, L indicates that a large (L) rotor was used, 1+4 indicates that preheating time is one minute and rotor rotation time is four minutes, and 100°C is measurement temperature.

The SBR preferably has a ratio of weight average molecular weight (Mw) to number average molecular weight (Mn) of 10.00 or less, more preferably 8.00 or less, still more preferably 7.00 or less. The lower limit of the ratio of Mw/Mn is not particularly critical, but is preferably 0.50 or more, more preferably 1.00 or more, still more preferably 2.00 or more, particularly preferably 3.00 or more, most preferably 4.00 or more. When the ratio of Mw/Mn falls within the above range, a balanced improvement of processability, rubber strength, fuel economy, abrasion resistance, and crack propagation resistance can be achieved.

Herein, the weight average molecular weight (Mw) and the number average molecular weight (Mn) of SBR or BR can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The SBR preferably has a vinyl content of 10% by mass or more, more preferably 20% by mass or more, still more preferably 30% by mass or more. A vinyl content of less than 10% by mass tends to cause deterioration in processability or wet grip performance. The vinyl content is preferably 90% by mass or less, more preferably 80% by mass or less, still more preferably 70% by mass or less. A vinyl content of more than 90% by mass tends to cause a decrease in rubber strength, abrasion resistance, or fuel economy.

Herein, the vinyl content of SBR can be determined by infrared absorption spectrometry.

The SBR may be prepared by any method. A person skilled in the art can easily prepare SBR with the properties set to desired values.

The amount of the SBR based on 100% by mass of the rubber component is preferably 10% by mass or more, more preferably 20% by mass or more, still more preferably 30% by mass or more, particularly preferably 40% by mass or more, most preferably 50% by mass or more, further most preferably 60% by mass or more. With less than 10% by mass of the SBR, rubber strength, fuel economy, abrasion resistance, or crack propagation resistance (particularly crack propagation resistance or abrasion resistance) may be insufficient. The amount of the SBR is preferably 80% by mass or less, more preferably 75% by mass or less. With more than 80% by mass of the SBR, processability, rubber strength, fuel economy, or abrasion resistance may be insufficient.

In the present invention, the rubber component includes a polybutadiene rubber (BR) having a stress relaxation time ($T_{80}$) of 10 or more in addition to the SBR.

The BR used in the present invention has a stress relaxation time ($T_{80}$) of 10 or more, preferably 12 or more. The $T_{80}$ is also preferably 50 or less, more preferably 40 or less, still more preferably 30 or less, particularly preferably 25 or less, most preferably 20 or less. When the $T_{80}$ falls within the above range, a balanced improvement of processability, rubber strength, fuel economy, abrasion resistance, and crack propagation resistance can be achieved.

Herein, $T_{80}$ refers to the time (in seconds) required for the Mooney viscosity $ML_{1+4}$ (100°C) (Mooney viscosity measured at 100°C in accordance with JIS K6300-1:2013) to drop by 80% after the rotation of the rotor is stopped immediately following the $ML_{1+4}$ measurement. In other words, $T_{80}$ is the time (in seconds) required for the torque to drop by 80%, where 100% represents the torque when the rotor is stopped in a Mooney test.

The BR preferably has a cis content of 96% by mass or more. The upper limit is not particularly critical. A cis content of less than 96% by mass may lead to deterioration in abrasion resistance.

Herein, the cis content of BR can be determined by infrared absorption spectrometry.

The BR preferably has a Mooney viscosity $ML_{1+4}$ (100°C) of 35 to 75, more preferably 37 to 65. When the Mooney viscosity falls within the above range, a balanced improvement of processability, rubber strength, fuel economy, abrasion resistance, and crack propagation resistance can be achieved.

The BR preferably has a ratio of weight average molecular weight (Mw) to number average molecular weight (Mn) of 5.00 or less, more preferably 4.00 or less, still more preferably 3.00 or less. The lower limit of the ratio of Mw/Mn is not particularly critical, but is preferably 0.50 or more, more preferably 1.00 or more, still more preferably 2.00 or more. When the ratio of Mw/Mn falls within the above range, a balanced improvement of processability, rubber strength, fuel economy, abrasion resistance, and crack propagation resistance can be achieved.

The BR may be prepared by any method. A person skilled in the art can easily prepare BR with the properties set to desired values.

The amount of the BR based on 100% by mass of the rubber component is preferably 1% by mass or more, more preferably 5% by mass or more, still more preferably 10% by mass or more, particularly preferably 20% by mass or more, most preferably 25% by mass or more. With less than 1% by mass of the BR, processability, rubber strength, fuel economy, or abrasion resistance may be insufficient. The amount of the BR is preferably 50% by mass or less, more preferably 40% by mass or less. With more than 50% by mass of the BR, rubber strength, abrasion resistance, or crack propagation resistance may be insufficient.

Examples of other rubbers that may be used in addition to the SBR and the BR in the rubber component include styrene-butadiene copolymer rubber (SBR) other than the SBR, polybutadiene rubber (BR) other than the BR, butadiene-isoprene copolymer rubber, and butyl rubber. Other examples include natural rubber (NR), ethylene-propylene copolymers, and ethylene-octene copolymers. Two or more of these rubbers may be used in combination.

To more suitably achieve the effect of the present invention, the combined amount of the SBR and the BR based on 100% by mass of the rubber component is preferably 80% by mass or more, more preferably 90% by mass or more, and may be 100% by mass.

The rubber composition of the present invention preferably further contains a filler. The term "filler" herein refers to a material that is incorporated into a rubber composition to reinforce the rubber. Examples include white fillers such as silica, calcium carbonate, mica (e.g. sericite), aluminum hydroxide, magnesium oxide, magnesium hydroxide, clay, talc, alumina, and titanium oxide, and carbon black. Two or more of these fillers may be used in combination. The rubber composition of the present invention preferably contains as the filler carbon black and/or silica, more preferably silica. In this case, the effect of the present invention can be more suitably achieved.

Non-limiting examples of the silica include dry silica (anhydrous silica) and wet silica (hydrous silica). Wet silica is preferred because it contains a large number of silanol groups.

The silica preferably has a nitrogen adsorption specific surface area ($N_2SA$) of 10 m$^2$/g or more, more preferably 50 m$^2$/g or more, still more preferably 100 m$^2$/g or more, particularly preferably 150 m$^2$/g or more. Silica having a $N_2SA$ of less than 10 m$^2$/g may provide insufficient reinforcement, resulting in insufficient rubber strength, abrasion resistance, or crack propagation resistance. The $N_2SA$ of the silica is also preferably 600 m$^2$/g or less, more preferably 300 m$^2$/g or less, still more preferably 260 m$^2$/g or less, particularly preferably 200 m$^2$/g or less. Silica having a $N_2SA$ of more than 600 m$^2$/g is difficult to disperse, which may result in deteriorated processability, fuel economy, or abrasion resistance.

The nitrogen adsorption specific surface area of silica is determined by the BET method in accordance with ASTM D3037-81.

In the case where the rubber composition of the present invention contains silica, the amount of silica per 100 parts by mass of the rubber component is preferably 5 parts by mass or more, more preferably 10 parts by mass or more, still more preferably 30 parts by mass or more, particularly preferably 45 parts by mass or more, most preferably 60 parts by mass or more. The incorporation of less than 5 parts by mass of silica tends to produce an insufficient effect, resulting in deteriorated fuel economy or abrasion resistance. The amount of silica is preferably 150 parts by mass or less, more preferably 120 parts by mass or less, still more preferably 100 parts by mass or less. Silica added in an amount of more than 150 parts by mass is difficult to disperse, which tends to result in deteriorated processability, fuel economy, or abrasion resistance.

In the case where the rubber composition of the present invention contains a filler, the amount of silica based on 100% by mass of the total filler is preferably 80% by mass or more, more preferably 90% by mass or more, and may be 100% by mass. With less than 80% by mass of silica, the effect of the present invention may be insufficient.

When the rubber composition of the present invention contains silica, the silica is preferably present in combination with a silane coupling agent.

The silane coupling agent may be a conventionally known one, and examples include: sulfide silane coupling agents such as bis(3-triethoxysilylpropyl)tetrasulfide,
bis(2-triethoxysilylethyl)tetrasulfide,
bis(3-trimethoxysilylpropyl)tetrasulfide,
bis(2-trimethoxysilylethyl)tetrasulfide,
bis(3-triethoxysilylpropyl)trisulfide,
bis(3-trimethoxysilylpropyl)trisulfide,
bis(3-triethoxysilylpropyl)disulfide,
bis(3-trimethoxysilylpropyl)disulfide,
3-trimethoxysilylpropyl-N,N-dimethylthiocarbamoyltetrasulfide,
3-trimethoxysilylpropylbenzothiazolyltetrasulfide,
3-triethoxysilylpropylbenzothiazoletetrasulfide,
3-triethoxysilylpropyl methacrylate monosulfide, and
3-trimethoxysilylpropyl methacrylate monosulfide; mercapto silane coupling agents such as
3-mercaptopropyltrimethoxysilane,
3-mercaptopropyltriethoxysilane,
2-mercaptoethyltrimethoxysilane, and
2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane,
3-(2-aminoethyl)aminopropyltriethoxysilane, and
3-(2-aminoethyl)aminopropyltrimethoxysilane; glycidoxy silane coupling agents such as
$\gamma$ -glycidoxypropyltriethoxysilane,
$\gamma$ -glycidoxypropyltrimethoxysilane,
$\gamma$ -glycidoxypropylmethyldiethoxysilane, and
$\gamma$ -glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane,
3-chloropropyltriethoxysilane,
2-chloroethyltrimethoxysilane, and
2-chloroethyltriethoxysilane. These silane coupling agents may be used alone or in combinations of two or more. In view of the coupling effect of the silane coupling agent, processability, and cost, sulfide silane coupling agents are preferred among these, with bis(3-triethoxysilylpropyl)-tetrasulfide or bis(3-triethoxysilylpropyl)disulfide being more preferred.

In the case where the rubber composition of the present invention contains a silane coupling agent, the amount of the silane coupling agent per 100 parts by mass of silica is preferably 3 parts by mass or more, more preferably 5 parts by mass or more. The use of less than 3 parts by mass of the silane coupling agent tends not to provide a sufficient coupling effect, thereby failing to allow the silica to be highly dispersed, and also tends not to allow the effect of the present invention to be sufficiently achieved. As a result, fuel economy or abrasion resistance may decrease. The amount of the silane coupling agent per 100 parts by mass of silica is also preferably 15 parts by mass or less, more preferably 10 parts by mass or less. If the amount is more than 15 parts by mass, the remaining extra silane coupling agent may reduce the processability and abrasion resistance of the resulting rubber composition.

Examples of the carbon black include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These types of carbon black may be used alone or in combinations of two or more.

The carbon black usually has a nitrogen adsorption specific surface area ($N_2SA$) of 5 to 200 $m^2$/g. The lower limit is preferably 50 $m^2$/g, more preferably 80 $m^2$/g, while the upper limit is preferably 150 $m^2$/g, more preferably 120 $m^2$/g. The carbon black usually has a dibutyl phthalate (DBP) absorption of 5 to 300 mL/100 g. The lower limit is preferably 80 mL/100 g, while the upper limit is preferably 180 mL/100 g. Carbon black having a $N_2SA$ or DBP absorption of less than the lower limit of the above range tends to produce a small reinforcing effect, resulting in reduced abrasion resistance.

Carbon black having a $N_2SA$ or DBP absorption of more than the upper limit of the above range tends to disperse poorly, resulting in increased hysteresis loss and reduced fuel economy.

The nitrogen adsorption specific surface area is measured in accordance with ASTM D4820-93. The DBP absorption is measured in accordance with ASTM D2414-93.

In the case where the rubber composition of the present invention contains carbon black, the amount of carbon black per 100 parts by mass of the rubber component is preferably 1 part by mass or more, more preferably 3 parts by mass or more. The use of less than 1 part by mass of carbon black may provide insufficient reinforcement. The amount of carbon black is preferably 60 parts by mass or less, more preferably 30 parts by mass or less, still more preferably 15 parts by mass or less. The use of more than 60 parts by mass of carbon black tends to deteriorate fuel economy.

The rubber composition of the present invention may contain, in addition to the above-described components, compounding agents conventionally used in the rubber industry, including, for example: vulcanizing agents such as sulfur; vulcanization accelerators such as thiazole, thiuram, sulfenamide, and guanidine vulcanization accelerators; vulcanization activators such as stearic acid and zinc oxide; organic peroxides; processing aids such as extender oils (oils) and lubricants; and antioxidants.

Non-limiting examples of extender oils (oils) include conventionally known oils, including process oils such as paraffinic process oils, aromatic process oils, and naphthenic process oils, vegetable fats and oils, and mixtures of the foregoing. Among these, aromatic process oils are preferred to more suitably achieve the effect of the present invention.

In the case where the rubber composition of the present invention contains an extender oil (oil), the amount of the extender oil (oil) per 100 parts by mass of the rubber component is preferably 5 to 50 parts by mass, more preferably 10 to 40 parts by mass, still more preferably up to 25 parts by mass. When the amount of the extender oil (oil) falls within the above range, the effect of the present invention can be more suitably achieved.

Examples of vulcanization accelerators include thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. To more suitably achieve the effect of the present invention, sulfenamide vulcanization accelerators are preferred among these, with N-t-butyl-2-benzothiazolesulfenamide being more preferred. The amount of the vulcanization accelerator per 100 parts by mass of the rubber component is preferably 0.1 to 6 parts by mass, more preferably 0.2 to 5 parts by mass.

The vulcanizing agent is not particularly limited, but may suitably be sulfur. The amount of sulfur per 100 parts by mass of the rubber component is preferably 0.5 to 5 parts by mass, more preferably 1 to 3 parts by mass. In this case, the effect of the present invention can be more suitably achieved.

The rubber composition of the present invention can be prepared by usual methods. Specifically, the rubber composition may be prepared, for example, by kneading the components described above using a Banbury mixer, a kneader, an open roll mill, or other kneading machines, and vulcanizing the kneaded mixture.

The rubber composition of the present invention can be used in various tire components, including treads, sidewalls, carcasses, belts, and beads, and especially suitably in treads or sidewalls of tires. For example, a two-layer tread consists of an outer surface layer (cap tread) and an inner surface layer (base tread). The rubber composition of the present invention can be particularly suitably used in base treads or sidewalls.

Multi-layer treads can be produced by assembling sheet-shaped rubber compositions into a predetermined shape, or by feeding rubber compositions into two or more extruders and forming them into a two- or more-layered product at the head outlet of the extruders.

The pneumatic tire of the present invention can be formed from the rubber composition by usual methods. Specifically, an unvulcanized rubber composition containing the SBR and the BR, and optionally the aforementioned compounding agents is extruded and processed into the shape of a tire component such as a tread (particularly a base tread) or a sidewall and assembled with other tire components in a conventional manner on a tire building machine to build an unvulcanized tire. The unvulcanized tire is heat-pressed in a vulcanizer to produce a pneumatic tire of the present invention.

The pneumatic tire of the present invention is suitable for, for example, passenger vehicles, trucks and buses, two-wheeled vehicles, and racing vehicles, and especially for passenger vehicles.

EXAMPLES

The present invention is specifically described with reference to, but not limited to, examples below.

The chemicals used in the example and comparative examples are listed below.

SBR (1): Nipol 1502 available from Zeon Corporation (styrene content: 24% by mass, Mooney viscosity $ML_{1+4}$

(100°C) : 45, Mw/Mn: 4.50, vinyl content: 16% by mass)

SBR (2) : N9540 available from Zeon Corporation (styrene content: 38% by mass, Mooney viscosity $ML_{1+4}$ (100°C) : 50, Mw/Mn: 6.00, vinyl content: 15% by mass)

BR (1) : BR150L available from Ube Industries, Ltd. ($T_{80}$: 2, cis content: 98% by mass, Mooney viscosity $ML_{1+4}$ (100°C): 43, Mw/Mn: 2.25)

BR (2) : an improved product of BR150L available from Ube Industries, Ltd. ($T_{80}$: 15, cis content: 97% by mass, Mooney viscosity $ML_{1+4}$ (100°C): 40, Mw/Mn: 3.00)

Silica: Ultrasil VN3 ($N_2SA$: 175 $m^2$/g) available from Evonik Degussa

Silane coupling agent: Si69 (bis(3-triethoxysilylpropyl)tetrasulfide) available from Evonik Degussa

Oil: Diana Process AH-24 (aromatic process oil) available from Idemitsu Kosan Co., Ltd.

Zinc oxide: zinc oxide available from Mitsui Mining and Smelting Co., Ltd.

Stearic acid: stearic acid "Tsubaki" available from NOF Corporation

Antioxidant: Ozonone 6C (N-(1,3-dimethylbutyl)-N'-phenyl-p-phenylenediamine) available from Seiko Chemical Co., Ltd.

Wax: Sunnoc N available from Ouchi Shinko Chemical Industrial Co., Ltd.

Sulfur: sulfur powder available from Tsurumi Chemical Industry Co., Ltd.

Vulcanization accelerator: NOCCELER NS (N-t-butyl-2-benzothiazolesulfenamide) available from Ouchi Shinko Chemical Industrial Co., Ltd.

(Example and Comparative Examples)

The materials other than the sulfur and vulcanization accelerator in the amounts indicated in Table 1 were introduced into a 1.7 L Banbury mixer (Kobe Steel, Ltd.), and they were kneaded for five minutes to give a discharge temperature of about 150 °C and discharged (base kneading step). To the kneaded mixture were added the sulfur and vulcanization accelerator in the amounts indicated in Table 1, and they were kneaded in an open roll mill for about three minutes to give a discharge temperature of 80°C, thereby obtaining an unvulcanized rubber composition (final kneading step). The unvulcanized rubber composition was press-vulcanized at 170°C for 20 minutes to obtain a vulcanized rubber composition.

<Evaluation items and test methods>

The vulcanized rubber compositions prepared as above were evaluated as follows. Table 1 shows the results.

(Fuel economy index)

Specimens of a predetermined size were cut out of each vulcanized rubber composition. The loss tangent (tan δ) at 60°C of the vulcanized rubber sheets was measured at an initial strain of 10%, a dynamic strain of 2%, and a frequency of 10 Hz using a viscoelastic spectrometer available from Ueshima Seisakusho Co., Ltd. The tan δ values are expressed as an index (fuel economy index) using the equation below, with Comparative Example 1 set equal to 100. A higher index indicates better fuel economy.

```
(Fuel economy index) = (tan δ of Comparative Example 1)/(tan
δ of each formulation example) × 100
```

(Abrasion resistance index)

The Lambourn abrasion loss of each vulcanized rubber composition was determined using a Lambourn abrasion tester at a temperature of 20°C, a slip ratio of 20%, and a test time of 2 minutes. Then, a volume loss was calculated from the Lambourn abrasion loss. The volume loss of each formulation example is expressed as an index (abrasion resistance index), with Comparative Example 1 set equal to 100. A higher abrasion resistance index indicates better abrasion resistance.

[Table 1]

|  |  | Comparative Example | | | Example |
| --- | --- | --- | --- | --- | --- |
|  |  | 1 | 2 | 3 | 1 |
| Formulation (parts by mass) | SBR (1) | 70 | — | 70 | — |
|  | SBR (2) | — | 70 | — | 70 |
|  | BR (1) | 30 | 30 | — | — |
|  | BR (2) | — | — | 30 | 30 |
|  | Silica | 75 | 75 | 75 | 75 |
|  | Oil | 15 | 15 | 15 | 15 |
|  | Silane coupling agent | 6 | 6 | 6 | 6 |
|  | Wax | 2 | 2 | 2 | 2 |
|  | Antioxidant | 2 | 2 | 2 | 2 |
|  | Zinc oxide | 2.5 | 2.5 | 2.5 | 2.5 |
|  | Stearic acid | 2 | 2 | 2 | 2 |
|  | Sulfur | 2 | 2 | 2 | 2 |
|  | Vulcanization accelerator | 4 | 4 | 4 | 4 |
| Evaluation results | Fuel economy index | 100 | 91 | 81 | 112 |
|  | Abrasion resistance index | 100 | 90 | 95 | 115 |

Table 1 demonstrates that the rubber composition of the example which contained a styrene-butadiene rubber having a styrene content of 30% by mass or more and a polybutadiene rubber having a stress relaxation time ($T_{80}$) of 10 or more achieved a balanced improvement of fuel economy and abrasion resistance.

The present invention provides a rubber composition for tires that can provide for a balanced improvement of fuel economy and abrasion resistance, and a pneumatic tire formed from the rubber composition. The present invention relates to a rubber composition for tires, containing: a styrene-butadiene rubber having a styrene content of 30% by mass or more; and a polybutadiene rubber having a stress relaxation time ($T_{80}$) of 10 or more.

**Claims**

1. A pneumatic tire, comprising a tire component formed from a rubber composition for tires,
   the rubber composition comprising:

   a styrene-butadiene rubber having a styrene content of 30% by mass or more; and
   a polybutadiene rubber having a stress relaxation time ($T_{80}$) of 10 or more.

2. The pneumatic tire according to claim 1,
   wherein the styrene-butadiene rubber has a Mooney viscosity of 35 to 75 and a ratio of weight average molecular weight (Mw) to number average molecular weight (Mn) of 10.00 or less.

3. The pneumatic tire according to claim 1 or 2,
   wherein the polybutadiene rubber has a cis content of 96% by mass or more, a Mooney viscosity of 35 to 75, and a ratio of weight average molecular weight (Mw) to number average molecular weight (Mn) of 5.00 or less.

4. The pneumatic tire according to any one of claims 1 to 3,
   wherein the styrene-butadiene rubber is present in an amount of 10% to 80% by mass based on 100% by mass of a rubber component in the rubber composition.

**5.** The pneumatic tire according to any one of claims 1 to 4,
wherein the polybutadiene rubber is present in an amount of 10% to 50% by mass based on 100% by mass of a rubber component in the rubber composition.

**6.** The pneumatic tire according to any one of claims 1 to 5,
wherein the rubber composition comprises at least one of carbon black or silica.

**7.** The pneumatic tire according to any one of claims 1 to 6,
wherein the rubber composition comprises 30 parts by mass or more of silica per 100 parts by mass of a rubber component in the rubber composition.

Europäisches
Patentamt

European
Patent Office

Office européen
des brevets

# EUROPEAN SEARCH REPORT

Application Number

EP 18 15 5517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2017/056767 A1 (SUMITOMO RUBBER IND [JP]) 6 April 2017 (2017-04-06) * the whole document * | 1,2,4-7 | INV. C08L9/00 C08L9/06 C08K3/04 C08K3/36 B60C1/00 |
| L | & EP 3 336 139 A1 (SUMITOMO RUBBER IND [JP]) 20 June 2018 (2018-06-20) * the whole document * | 1-7 | |
| Y | EP 3 106 491 A1 (UBE INDUSTRIES [JP]; SUMITOMO RUBBER IND [JP]) 21 December 2016 (2016-12-21) * claims 1-6; tables 1-3 * | 1-7 | |
| Y | EP 3 106 479 A1 (UBE INDUSTRIES [JP]) 21 December 2016 (2016-12-21) * claims 1-3; tables 1-3 * | 1-7 | |
| Y | DATABASE WPI Week 200439 Thomson Scientific, London, GB; AN 2004-416318 XP002782467, -& KR 2003 0097194 A (HANKOOK TIRE MFG CO LTD) 31 December 2003 (2003-12-31) * abstract * | 1-7 | |
| Y | DATABASE WPI Week 200430 Thomson Scientific, London, GB; AN 2004-325797 XP002782468, -& KR 2003 0079151 A (HANKOOK TIRE MFG CO LTD) 10 October 2003 (2003-10-10) * abstract * | 1-7 | |

TECHNICAL FIELDS
SEARCHED (IPC)

C08L
C08K
B60C

The present search report has been drawn up for all claims

| Place of search | Date of completion of the search | Examiner |
|---|---|---|
| Munich | 26 June 2018 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 5517

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2018

| Patent document cited in search report | | Publication date | Patent family member(s) | | Publication date |
|---|---|---|---|---|---|
| WO 2017056767 | A1 | 06-04-2017 | CN | 108026331 A | 11-05-2018 |
| | | | EP | 3336139 A1 | 20-06-2018 |
| | | | WO | 2017056767 A1 | 06-04-2017 |
| EP 3106491 | A1 | 21-12-2016 | CN | 106062064 A | 26-10-2016 |
| | | | EP | 3106491 A1 | 21-12-2016 |
| | | | JP | 6114467 B2 | 12-04-2017 |
| | | | JP | WO2015151626 A1 | 13-04-2017 |
| | | | US | 2017107358 A1 | 20-04-2017 |
| | | | WO | 2015151626 A1 | 08-10-2015 |
| EP 3106479 | A1 | 21-12-2016 | CN | 106103505 A | 09-11-2016 |
| | | | EP | 3106479 A1 | 21-12-2016 |
| | | | JP | 5928660 B2 | 01-06-2016 |
| | | | JP | 5994956 B1 | 21-09-2016 |
| | | | JP | 2016172862 A | 29-09-2016 |
| | | | JP | WO2015151625 A1 | 13-04-2017 |
| | | | TW | 201540736 A | 01-11-2015 |
| | | | US | 2017015766 A1 | 19-01-2017 |
| | | | WO | 2015151625 A1 | 08-10-2015 |
| KR 20030097194 | A | 31-12-2003 | NONE | | |
| KR 20030079151 | A | 10-10-2003 | NONE | | |

EPO FORM P0459

For more details about this annex : see Official Journal of the European Patent Office, No. 12/82

## EP 3 372 637 A1

**Patent documents cited in the description**

- JP 2000344955 A